(19) Europäisches Patentamt

European Patent Office

Office européen des brevets

(11) **EP 1 048 944 A2**

(12) **EUROPEAN PATENT APPLICATION**

(43) Date of publication:
02.11.2000 Bulletin 2000/44

(51) Int. Cl.$^7$: **G01M 15/00**

(21) Application number: **00108956.4**

(22) Date of filing: **27.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.04.1999 JP 12267599**
**30.04.1999 JP 12386499**
**30.04.1999 JP 12388299**

(71) Applicant: **HORIBA, LTD.**
**Minami-ku Kyoto (JP)**

(72) Inventors:
• **Nakanishi, Hideki,**
**c/o Horiba Ltd.**
**Kyoto (JP)**
• **Noguchi, Shinji,**
**c/o Horiba Ltd.**
**Kyoto (JP)**
• **Ogawa, Yasuhiro,**
**c/o Horiba Ltd.**
**Kyoto (JP)**

(74) Representative:
**MÜLLER & HOFFMANN Patentanwälte**
**Innere Wiener Strasse 17**
**81667 München (DE)**

(54) **Engine testing apparatus**

(57) This invention provides an engine testing apparatus capable of accurately conduct a simulation of a vehicle, said engine testing apparatus comprises a dynamometer (2) connected to an output section (1a) of an engine (1) under test used to simulate an actual vehicle running on a chassis dynamo, a dynamo controller (7) for controlling rotation of the dynamometer (2), and an actuator (6) for controlling a throttle opening degree of the engine (1) under test, the dynamo controller (7) and the actuator (6) are controlled to adjust an output of the engine (1) under test, wherein a tire slip caused during the actual vehicle running is corrected at the time of simulation, thereby controlling the rotation of the dynamometer (2), or wherein rotation accelerations $\omega e, \omega r, \omega f, \omega w$ of rotating bodies such as the engine (1), a transmission, a differential gear and a tire are respectively multiplied by an inertia moment $Je, Jr, Jf, Jw$ of each of the rotation bodies to calculate a torque $Te, Tr, Tf, Tw$ absorbed by each of the rotating bodies, and the engine (1) under test is controlled such that these absorbed torques are considered at the time of simulation.

Fig. 3

## Description

BACKGROUND OF THE INVENTION

Field of the Invention

The present invention relates to an engine testing apparatus.

Description of the Prior Art

As an apparatus for checking the performance of an automobile engine, there exists an engine testing apparatus comprising a dynanometer connected to an output section of an engine which is to be tested (in the following: engine under test), a dynamo controller for controlling the dynamometer, and an actuator for controlling a throttle opening degree of the engine under test, and the engine testing apparatus controls the dynamo controller and the actuator to adjust the output of the engine under test.

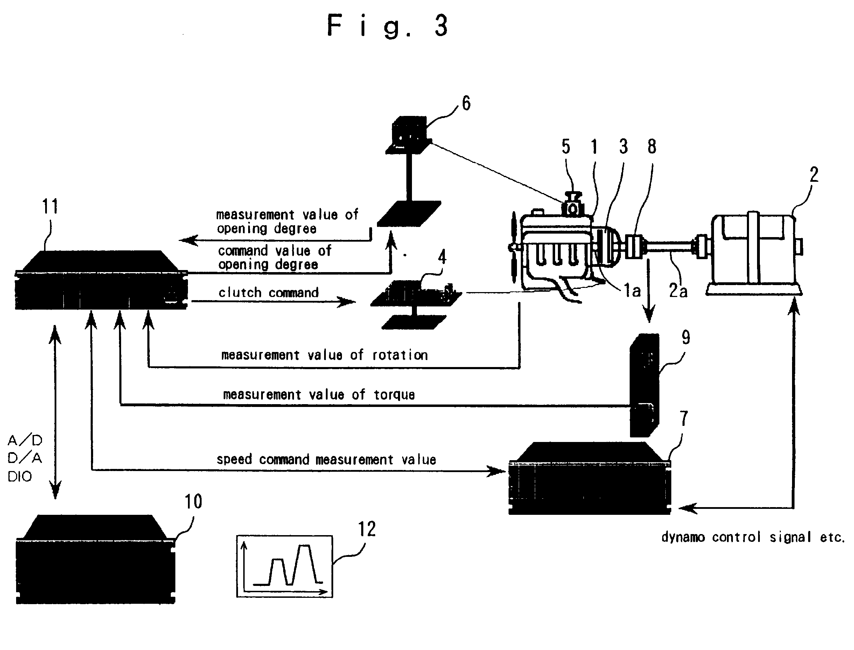

Fig. 3 schematically shows a general structure of the engine testing apparatus. In Fig. 3, the reference numeral 1 represents an engine under test and 2 represents a dynamometer. An output shaft 1a of the engine 1 and a driving shaft 2a of the dynamometer 2 are coupled to each other through a clutch 3 such that the shafts 1a and 2a can be connected to and disconnected from each other. The reference numeral 4 represents a clutch actuator for driving the clutch 3. The reference numeral 5 represents a throttle of the engine 1 under test, and the throttle 5 is driven by a throttle actuator 6 and its throttle opening degree is controlled. The reference numeral 7 represents a dynamo controller for controlling the dynamometer 2. The reference numeral 8 represents a torque sensor mounted to the driving shaft 2a of the dynamometer 2, and the reference numeral 9 represents a torque amplifier for appropriately amplifying the output of the torque sensor 8.

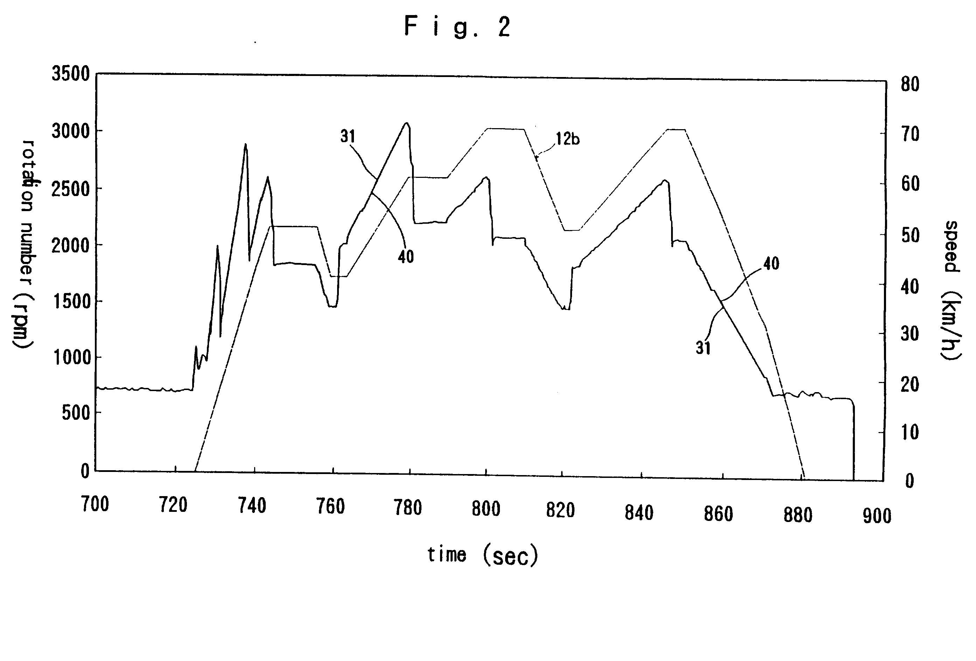

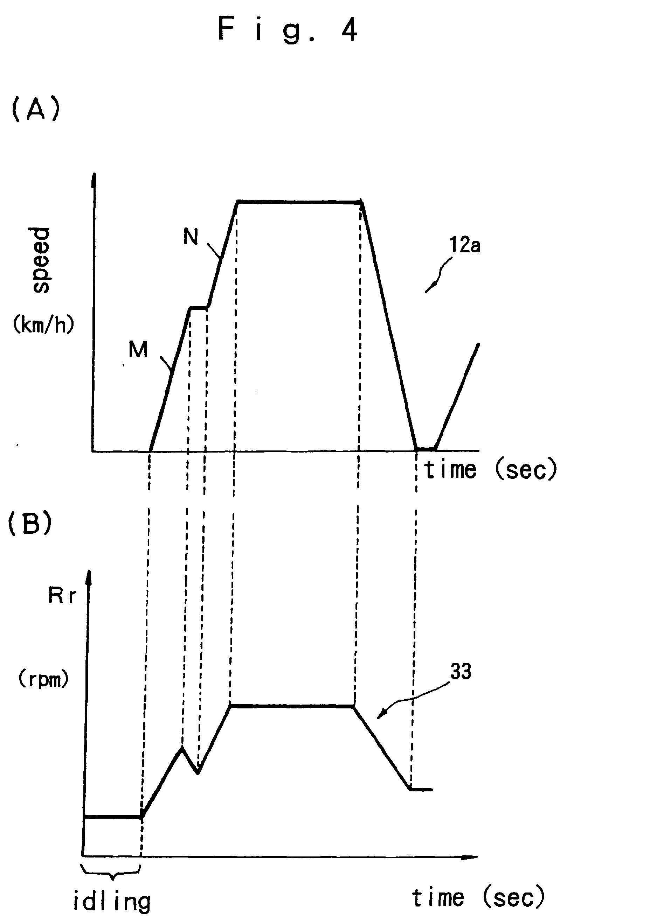

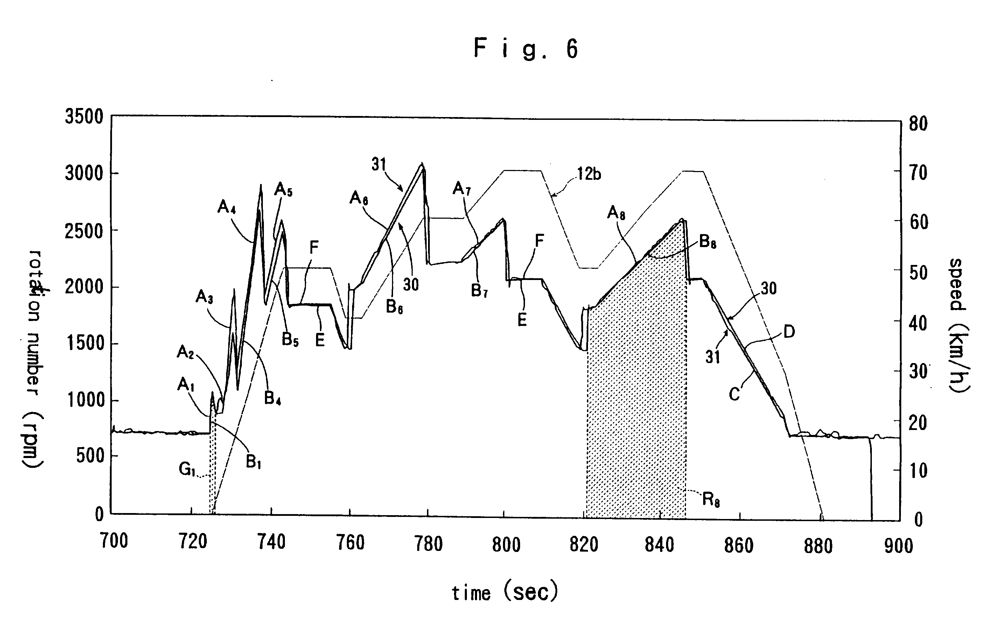

The reference numeral 10 represents a control computer as a simulator for controlling the entire apparatus, and the reference numeral 11 represents a signal conditioner unit. The computer 10 performs a computation based on an input from an input apparatus (not shown) and based on signals from various sensor such as the torque sensor 8 provided in the apparatus, and outputs commands to various portions of the apparatus. For example, a target vehicle speed pattern 12 shown in Fig. 3, a target vehicle speed pattern 12a shown in Fig. 4(A) or a target vehicle speed pattern 12b shown in Figs.2 and 6 are input to the computer 10. That is, in each of the target vehicle speed patterns 12, 12a and 12b, the horizontal axis shows time (second) and vertical axis shows speed (km/h), and these patterns are target running patterns of desired driving.

The signal conditioner unit 11 is an interface having AD converting functions and DA converting functions. The signal conditioner unit 11 AD-converts signals from various sensors such as a torque sensor 8, DA-converts commands from the computer 10, and outputs commands to various portions of the apparatus such as the dynamo controller 7, the clutch actuator 4 and the throttle actuator 6.

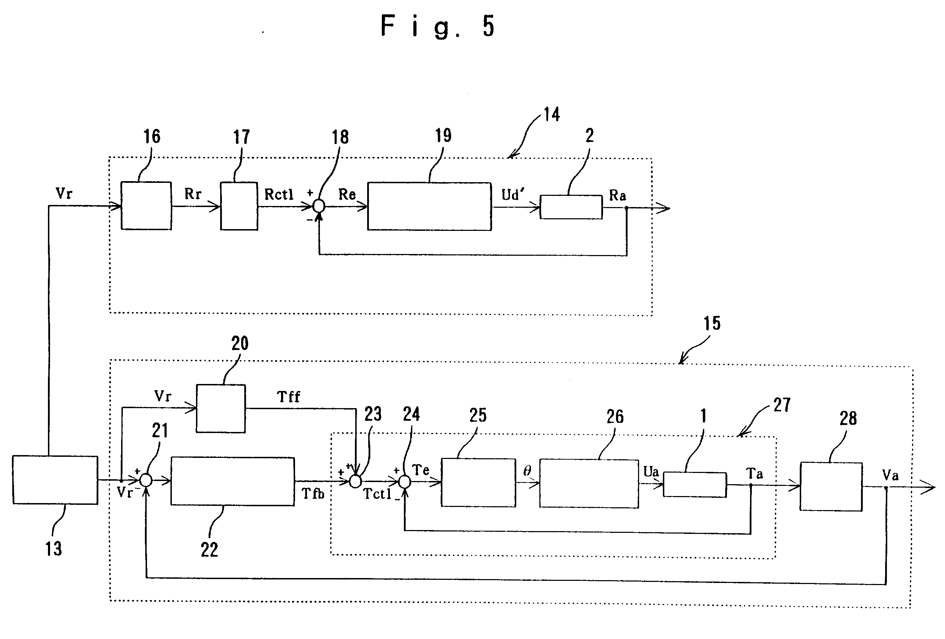

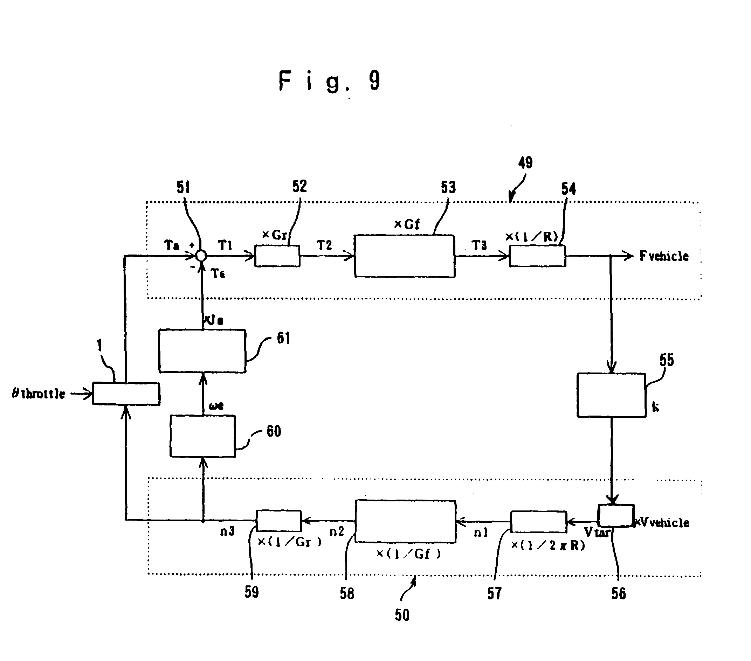

In a conventional engine testing apparatus, as shown in Figs.5 and 9, among rotating objects of an actual vehicle, i.e., an engine, a transmission, a differential gear and tire, a moment of inertia of the engine is used for computation of a load. This is because the moment of inertia of the engine is greater than moments of other rotating objects.

Figs. 5 and 9 respectively show a conventional control flow and computation flow in the above-described engine testing apparatus. First, the control flow will be explained. In Fig. 5, the reference numeral 13 represents a target pattern generator. The target pattern generator 13 is provided in the computer 10, and outputs a target speed signal Vr for allowing the engine 1 under test to run in a predetermined running pattern based on the target vehicle speed patterns 12, 12a and 12b which have been input into the computer 10. This target speed signal Vr is input to a rotation control system 14 and a simulation vehicle control system 15.

The rotation control system 14 and the simulation vehicle control system 15 are constituted in the following manner. First, the rotation control system 14 comprises a rotation generator 16 to which the target speed signal Vr is input, a delay correcting circuit 17, a subtracting point 18, a rotation feedback controller 19 and the dynamometer 2.

In the rotation control system 14, when the target speed signal Vr is input to the rotation generator 16, an engine target rotation number signal [a target value of the dynamometer rotation number (the rotation number, hereinafter)] Rr is output from the rotation generator 16 based on the target speed signal Vr.

For example, as shown in Fig. 4(B), a target rotation number signal Rr converted from the target vehicle speed pattern 12a shown in Fig. 4(A) is obtained in simulation. That is, an engine rotation pattern 33 is obtained. Similarly, when the target vehicle pattern 12b is employed, an engine rotation pattern 30 converted from the target vehicle speed pattern 12b is obtained as shown in Fig. 6. Then the pattern is converted from target vehicle speed pattern 12a to the engine rotation pattern 33 or from the target vehicle speed pattern 12b to the engine rotation pattern 30, a diameter of a tire, a final-drive ratio and a gear ratio in accordance with the kind of the vehicle are taken into consideration.

Referring back to Fig. 5, the target rotation number signal Rr becomes a control target rotation number signal Rctl through the delay correcting circuit 17, and is output to the subtracting point 18. Since an actual rotation number signal Ra of the dynamometer 2 has been input to the subtracting point 18, a deviation Re between the control target rotation number signal Rctl and an actual rotation number signal Ra is PI-controlled for example in the rotation feedback controller 19, thereby setting an operation amount signal Ud', and this operation amount signal Ud' is sent to the dynamometer 2.

In Fig. 5, in the simulation vehicle control system 15, a torque generator 20 to which the target speed signal Vr is input and a subtracting point 21 to which the target speed Vr is input and a speed feedback controller 22 are connected in parallel to a rear stage of the target pattern generator 13 which outputs the target speed signal Vr. A torque control system 27 comprising an adding point 23, a subtracting point 24, a throttle map 25, a throttle opening degree controller 26 and the engine 1 under test is provided in the rear stage of the torque generator 20 and the speed feedback controller 22. A simulation vehicle model 28 is provided in the rear stage of the torque control system 27. The throttle map 25 is a map for determining a target throttle opening degree in the engine control. The simulation vehicle model 28 is a model for calculating a driving force of the vehicle using the engine output torque to convert the calculated value into a speed signal using the driving force.

In the simulation vehicle control system 15, if the target speed Vr is input to the torque generator 20, based on this, a feedforward torque Tff which is an output torque required for the engine from the torque generator 20 is output to the adding point 23.

In this case, when the target vehicle speed pattern 12 or the target vehicle speed patterns 12a and 12b is converted into the feedforward torque Tff, a vehicle inertia weight and running resistance in accordance with the kind of the vehicle are taken into consideration.

The target speed signal Vr is compared against an actual speed signal Va output from the simulation vehicle model 28 in the subtracting point 21, and a deviation therebetween is sent to the speed feedback controller 22, and it is output to the adding point 23 as a feedback torque Tfb. The feedforward torque Tff and the feedback torque Tfb are added in the adding point 23, and the target control torque signal Tctl is obtained. The target control torque signal Tctl is compared against an actual output torque valuve Ta of the engine 1 under test in the subtracting point 24, and a deviation Te thereof is input to the throttle map 25, and an operation target throttle opening degree θ is obtained. The operation target throttle opening degree θ is input to the throttle opening degree controller 26, an operation amount Ua is set, and the operation amount signal Ua is sent to the engine under test 1.

Next, the computation flow will be explained. In Fig. 9, the reference numerals 49 and 50 respectively represent a torque computation system and a rotation computation system. First, the torque computation system 49 comprises a subtracting point 51 for comparing the output torque value Ta of the engine 1 under test and a torque value $T_E$ resulting from an engine inertia moment Je against each other, a multiplier 52 for multiplying the output T1 of the subtracting point 51 by a gear change ratio Gr and outputting a torque value T2 after gear change, a multiplier 53 for multiplying the torque value T2 after gear change by a differential gear ratio Gf and outputting a torque value T3 through the differential gear, and multiplier 54 for multiplying the torque value T3 through the differential gear by reciprocal 1/R of a tire diameter R and outputting a driving force Fvehicle in a tire surface.

The rotation computation system 50 comprises a multiplier 56 for multiplying a target vehicle speed Vvehicle by a tire slip ratio k from a calculator 55 which obtains the tire slip ratio k and outputting the target vehicle speed Vtar after correction of slip ratio, a multiplier 57 for multiplying the target vehicle speed Vtar by a multiplier (1/2πR) concerning the tire diameter and outputting a rotation angle speed n1 in the tire, a multiplier 58 for multiplying a rotation angle speed n1 in the tire by a multiplier (1/Gf) concerning the gear ratio and obtaining a rotation angle speed n2 closer to an entrance of the differential gear (closer to the engine), and a multiplier 59 for multiplying the rotation angle speed n2 closer to the entrance of the differential gear by a multiplier (1/Gr) concerning the gear change ratio and obtaining an engine rotation angle speed n3 (corresponding to the Vr).

The reference numeral 60 represents a differentiator for differentiate the engine rotation angle speed n3 and outputting an engine rotation acceleration ωe, the reference numeral 61 represents a multiplier for multiplying the engine rotation acceleration ωe by an engine inertia moment Je and outputting a torque value Te caused by engine inertia. The torque value Te caused by engine inertia is output to a subtracting point 51 of the torque computation system 49.

In the above-described conventional engine testing apparatus, a transmission efficiency constant representing the final transmission of an output of the engine to a road surface which becomes a driving force which accelerates the vehicle is only one constant. That is, the constant is used for matching the rotation number of a roller on a 2-shaft chassis dynamo with the rotation number of an actual vehicle, and in which a constant speed (normal) running driving was taken into consideration.

As shown in Fig. 6, in the simulation conducted by the conventional testing apparatus, if the engine rotation pattern 30 converted from the target vehicle speed pattern 12b and the engine rotation pattern 31 measured when the actual vehicle runs on a chassis dynamo are compared with each other, a difference is generated therebetween. It can be found from Fig. 6 that the engine rotation pattern 30 is shifted lower than the engine rotation pattern 31 at the time of acceleration and shifted higher than the engine rotation pattern 31 at the time of deceleration.

In the above-described conventional engine testing apparatus, as shown in Figs. 5 and 9, the rotation acceleration of the engine 1 under test obtained in the rotation computation system 50 is multiplied by an inertia moment of the engine 1 under test, and the result is used in the torque computation in the torque computation system 49 to calculate a load. That is, the simulation is conducted such that at the time of acceleration, the output torque $T_E$ corresponding to the inertia of the engine 1 under test is absorbed by the dynamometer 2, and at the time of deceleration, the torque is increased on the contrary.

Since a rotation driving force of the engine through the transmission and differential gear is transmitted to the tire at a ratio of 1:1 as it is, it is conceivable that controlling the actual rotation number Ra of the dynamometer 2 is the same as controlling the rotation number of the engine in effect. From this point of view, in the engine testing apparatus, it is necessary to reproduce the rotation number of the engine in the actual vehicle running.

Thus, as shown in Fig. 6, in a simulation carried out in the conventional engine testing apparatus, if the engine rotation pattern 30 converted from the target vehicle speed pattern 12b and the engine rotation pattern 31 measured when the actual vehicle runs on a chassis dynamo are compared with each other, a difference is generated therebetween. It can be found from Fig. 6 that the engine rotation pattern 30 is shifted lower than the engine rotation pattern 31 at the time of acceleration, and shifted higher than the engine rotation pattern 31 at the time of deceleration.

Therefore, in view of the above circumstances, it is an object of the invention to provide an engine testing apparatus capable of accurately conduct a simulation of a vehicle.

SUMMARY OF THE INVENTION

To achieve the above object, according to a first embodiment according to the invention, there is provided an engine testing apparatus comprising a dynamometer connected to an output section of an engine under test used to simulate an actual vehicle running on a chassis dynamo, a dynamo controller for controlling rotation of the dynamometer, and an actuator for controlling a throttle opening degree of the engine under test, the dynamo controller and the actuator are controlled to adjust an output of the engine under test, characterized in that a constant speed driving slip ratio (Sa) in a constant speed running state in a target vehicle speed pattern, an acceleration driving slip ratio (Sb) in an acceleration running state, and a deceleration driving slip ratio (Sc) in a deceleration running state are previously computed and stored as data for correcting a tire slip caused during the actual vehicle running, and an engine target rotation number (Rr) obtained by converting said target vehicle speed pattern by values of said driving slip ratios (Sa), (Sb) and (Sc) is corrected for each of the running states, wherein a new engine target rotation number obtained by this correction is used at the time of simulation, thereby controlling the rotation of the dynamometer.

According to a preferred embodiment of this engine testing apparatus in each of the running states, the rotation number $(Rta)\{[Rta=Rr\times(1+Sa)]$, $(Rtb)[Rtb=Rr\times(1+Sb)]$ or $(Rtc)[Rtc=Rr\times(1+Sc)\}$ obtained by adding a term obtained by multiplying the engine target rotation number (Rr) by the constant speed driving slip ratio (Sa), the acceleration driving slip ratio (Sb) or the deceleration driving slip ratio (Sc) to the engine target rotation number (Rr) is determined as a new rotation number subjected to a tire slip correction, and these are used at the time of simulation, thereby controlling the rotation of the dynamometer.

According to the present invention, it is considered that in Fig. 6, the reason why the engine rotation pattern 30 obtained by converting from the target vehicle speed pattern 12b in the conventional simulation was shifted lower and higher than the engine rotation pattern 31 measured when an actual vehicle runs on a chassis dynamo was related to slip of a tire. From this view point, a concept of the driving slip ratio S was introduced. This driving slip ratio S is defined using the average value of ratio between the engine rotation number shown by the engine rotation pattern 31 and the engine rotation number shown by the engine rotation pattern 30. Further, since the engine rotation patterns 30 and 33 are obtained from, e.g., the target vehicle speed patterns 12b and 12a including a constant speed (normal) section, an acceleration section and a deceleration section, each of states of constant speed, acceleration and deceleration can not be covered with one driving slip ratio S. From this point of view, the driving slip ratio S is divided into three kinds, i.e., constant speed, acceleration and deceleration, and respective slip ratios Sa, Sb and Sc were calculated.

For example, in Fig. 6, the acceleration driving slip ratio Sb can be obtained in the following manner.

(1) Areas under acceleration curves $A_1$ to $A_8$ in the engine rotation pattern 31 are obtained. For example, the area under the acceleration curve $A_1$ is $G_1$ (shaded portion). These areas $G_1$ to $G_8$ are added. That is, $G_1 + ... + G_8$ is determined as G.
(2) Areas under acceleration curves $B_1$ to $B_8$ in the engine rotation pattern 30 are obtained. For example, the area under the acceleration curve $B_8$ is $R_8$ (shaded portion). These areas $R_1$ to $R_8$ are added. That is, $R_1 + ... + R_8$ is determined as R.
(3) A ratio of both the G and R are computed and determined as a slip ratio Sb. That is, $Sb=G/R$.

The same computations are conducted for all the deceleration curves C in the engine rotation pattern 31 and all the deceleration curves D in the engine rotation pattern 30, thereby obtaining the slip ratio Sc.

The constant speed slip ratio Sa can be obtained by carrying out the same computation.

After the data for correcting the tire slip generated during the running of actual vehicle was obtained, a term obtained by multiplying the engine target rotation number (Rr) by the constant speed driving slip ratio Sa, the acceleration driving slip ratio Sb or the deceleration driving slip ratio Sc was added to the engine target rotation number (Rr), and the result was determined as a new rotation number Rta, Rtb or Rtc after the tire slip is corrected for each of the constant speed section, the acceleration section and the deceleration section.

In the engine testing apparatus of the above structure, in addition to the tire diameter, the final-drive ratio, the gear ratio, the vehicle inertia weight and the running resistance which are taken into consideration in the conventional engine testing apparatus, the slip between the tire and the road surface is also taken into consideration and therefore, it is possible to accurately reproduce the engine rotation during actual vehicle running.

That is, the engine rotation pattern 40 converted from the new rotation numbers Rta, Rtb or Rtc after the tire slip is corrected is not shifted from the measured engine rotation pattern 31 as shown in Fig. 2, the engine testing apparatus of the present invention in which the control computer 10 controls the rotation of the dynamometer 2 in accordance with the engine rotation pattern 30 converted from the new rotation numbers Rta, Rtb or Rtc after the tire slip is corrected can carry out a simulation with high accuracy as compared with the conventional engine testing apparatus in which the control computer 10 controls the rotation of the dynamometer 2 in accordance with the engine rotation pattern 30 converted from the target rotation number Rr.

Further, to achieve the above object, according to a second embodiment according to the invention, there is provided an engine testing apparatus comprising a dynamometer connected to an output section of an engine under test which is to be tested, a dynamo controller for controlling the dynamometer, and an actuator for controlling a throttle opening degree of the engine under test, the dynamo controller and the actuator are controlled to adjust an output of the engine under test, characterized in that rotation accelerations of rotating bodies such as the engine, a transmission, a differential gear and a tire are obtained based on the target vehicle speed pattern, each of the rotating accelerations is multiplied by an inertia moment of each of the rotation bodies to calculate a torque absorbed by each of the rotating bodies, and the engine under test is controlled such that the engine under test outputs a predetermined torque while taking these absorbed torque.

In the engine testing apparatus of the above structure, in addition to the inertia moment of the engine which is taken into consideration in the conventional engine testing apparatus, the inertia moment of other rotating bodies such as the transmission, the differential gear and the tire are also taken into consideration and therefore, it is possible to accurately reproduce the engine load during actual vehicle running, and to carry out a simulation with high accuracy.

Furthermore, to achieve the above object, according to a third embodiment according to the invention, there is provided an engine testing apparatus comprising a dynamometer connected to an output section of an engine under test which is to be tested used to simulate an actual vehicle running on a chassis dynamo, a dynamo controller for controlling rotation of the dynamometer, and an actuator for controlling a throttle opening degree of the engine under test, characterized in that a driving slip ratio (y) is computed and stored as a multiple-degree equation function y=f(Tff) using, as a variable, an output torque (Tff) output from a torque generator and required by the engine, wherein the engine target rotation number (Rr) is corrected using this value, and the rotation of the dynamometer is controlled using this corrected new rotation number.

According to a preferred embodiment of this engine testing apparatus the rotation number (Rt) [Rt=Rr×(1+y)] obtained by adding a term obtained by multiplying the engine target rotation number (Rr) by the driving slip ratio (y) to the engine target rotation number (Rr) is determined as a new rotation number after the tire slip correction is made, and the rotation of the dynamometer is controlled by using this new rotation number.

According to the invention, it is considered that the reason why the engine rotation pattern 30 obtained by converting from the target vehicle speed pattern 12b in the conventional simulation was shifted lower and higher than the engine rotation pattern 31 measured on a chassis dynamo was related to slip of a tire. From this view point, a concept of the rotation correcting ratio during the actual vehicle running, i.e., the driving slip ratio y was introduced. This is because that it is defined that the driving slip ratio y during the actual vehicle running is determined as function of acceleration of the vehicle, and the acceleration of this vehicle can be simulated by converting into the output torque of the engine. That is, this is because that the torque supplied to the tire from the engine through the transmission and the differential gear is transmitted to the road surface and becomes a driving force which accelerates the vehicle.

Thereupon, the tire slip ratio y was defined as function y=f(Tff) of multiple-degree equation using the torque Tff for achieving the target output from the torque generator as variable.

The engine target rotation number Rf (simply target rotation number, hereinafter) output from the rotation generator in the simulation is multiplied by the driving slip ratio y, and the obtained tire slip correction term (Rr×y) is added to the target rotation number Rr, thereby making a new rotation number Rt after the tire slip correction.

In the engine testing apparatus of the above structure, in addition to the tire diameter, the final-drive ratio, the gear ratio, the vehicle inertia weight and the running resistance which are taken into consideration in the conventional engine testing apparatus, the slip between the tire and the road surface is also taken into consideration and therefore, it is possible to accurately reproduce the engine rotation during actual vehicle running.

That is, the engine rotation pattern 40 converted from the new rotation number Rt after the tire slip is corrected is not shifted from the measured engine rotation pattern 31 as shown in Fig. 2, the engine testing apparatus of the present invention in which the control computer 10 controls the rotation of the dynamometer 2 in accordance with the engine rotation pattern 40 converted from the new rotation number Rt after the tire slip is corrected can carry out a simulation with high accuracy as compared with the conventional engine testing apparatus in which the control computer 10 controls the rotation of the dynamometer 2 in accordance with the engine rotation pattern 30 converted from the target rotation number Rr.

BRIEF DESCRIPTION OF THE DRAWINGS

Fig. 1 shows one example of a control flow in an engine testing apparatus according to the first embodiment according to the invention;
Fig. 2 shows, in comparing manner, an engine rotation pattern converted from a target vehicle speed pattern in a simulation carried out by the engine testing apparatus of the first and third embodiments according to the invention and an engine rotation pattern measured when an actual vehicle is allowed to run on a chassis dynamo;
Fig. 3 schematically shows the entire structure of the engine testing apparatus of the first, second and third embodiments according to the invention;
Fig. 4(A) shows one example of the target vehicle speed pattern, and Fig. 4(B) shows one example of the rotation target pattern;
Fig. 5 shows a control flow in a conventional engine testing apparatus;
Fig. 6 shows, in comparing manner, an engine rotation pattern converted from a target vehicle speed pattern in a simulation carried out by the conventional engine testing apparatus and an engine rotation pattern measured when an actual vehicle is allowed to run on a chassis dynamo;
Fig. 7 shows one example of a control flow in the engine testing apparatus according to the second embodiment according to the invention;
Fig. 8 shows one example of a computation flow in the engine testing apparatus according to the second embodiment according to the invention;

Fig. 9 shows a computation flow in the conventional engine testing apparatus; and
Fig. 10 shows one example of a control flow in the engine testing apparatus according to the third embodiment according to the invention.

DETAILED DESCRIPTION OF THE PREFERRED EMBODIMENTS

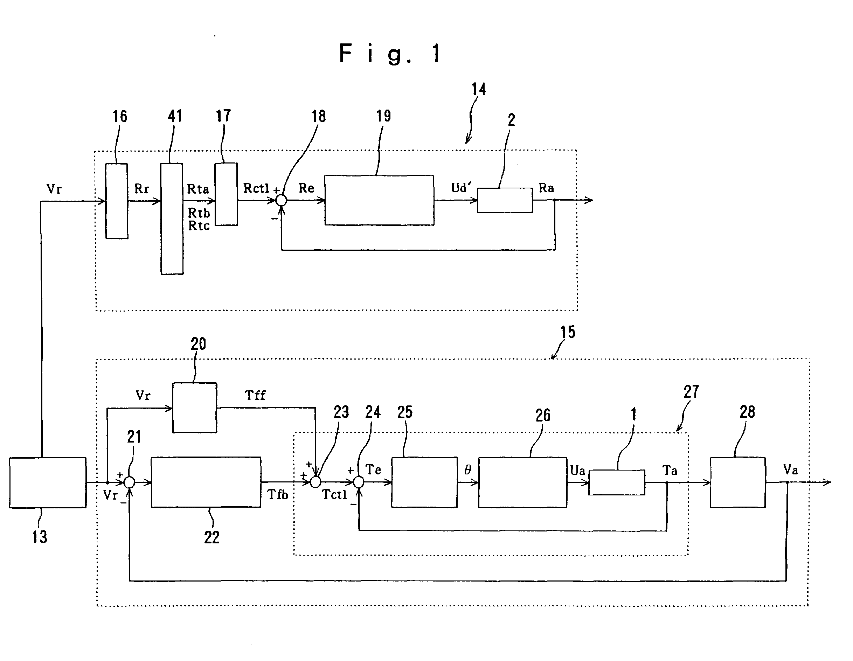

A first embodiment according to the invention will be explained with reference to the drawings. Fig. 1 shows one example of a control flow in an engine testing apparatus shown in Fig. 3. Fig. 2 shows, in comparing manner, an engine rotation pattern 40 converted from a target vehicle speed pattern 12b in a simulation carried out by the engine testing apparatus of the first embodiment according to the invention and an engine rotation pattern 31 measured when an actual vehicle is allowed to run on a chassis dynamo. In Figs. 1 and 2, members and elements represented with the same numerals as those in Figs. 5 and 6 are the same and thus explanations thereof will be omitted.

Fig. 1 showing the control flow of the engine testing apparatus of the first embodiment according to the invention is largely different from Fig. 5 showing the control flow of the above-described conventional engine testing apparatus in that a new rotation number after a tire slip correction was made is divided into a constant speed section, an acceleration section and a deceleration section, and using them, a dynamometer 2 is controlled.

This will be explained in more detail using the control flow shown in Fig. 1. In Fig. 1, the reference numeral 41 represents driving slip correcting means provided between a rotation generator 16 and delay correcting means 17.

This driving slip correcting means 41 has a computation function for adding all areas under acceleration curves $A_1$ to $A_8$ in engine rotation patterns 31 shown in Fig. 6

①, a computation function for adding all areas under acceleration curves $B_1$ to $B_8$ in engine rotation patterns 30 shown in Fig. 6, a function for computing a ratio (=acceleration driving slip ratio Sb) of each of total areas G and R obtained by the addition, a computation function for adding all areas under deceleration curves C in the engine rotation pattern 31 shown in Fig. 6

②, a computation function for adding all areas under deceleration curves D in the engine rotation pattern 30 shown in Fig. 6, a function for computing a ratio (=deceleration driving slip ratio Sc) of each of total areas obtained by the addition, a computation function for adding all areas under constant speed curves E in the engine rotation pattern 31 shown in Fig. 6

③, a computation function for adding all areas under constant speed curves F in the engine rotation pattern 30 shown in Fig. 6, a function for computing a ratio (=constant speed slip ratio Sa) of each of total areas obtained by the addition, and further,

④ a function for adding a term obtained by multiplying the engine target rotation number Rr by the acceleration driving slip ratio Sb to the target rotation number Rr to compute a new rotation number Rtb after the tire slip correction is made, i.e., at the acceleration section, a function for computing the new rotation number Rtb for controlling the rotation of the dynamometer 2 shown in the following equation (1):

$$Rtb=Rr\times(1+Sb) \qquad (1)$$

⑤ a function for adding a term obtained by multiplying the engine target rotation number Rr by the deceleration driving slip ratio Sc to the target rotation number Rr to compute a new rotation number Rtc after the tire slip correction is made, i.e., at the deceleration section, a function for computing the new rotation number Rtc for controlling the rotation of the dynamometer 2 shown in the following equation (2):

$$Rtc=Rr\times(1+Sc) \qquad (2)$$

⑥ a function for adding a term obtained by multiplying the engine target rotation number Rr by the constant speed driving slip ratio Sa to the target rotation number Rr to compute a new rotation number Rta after the tire slip correction is made, i.e., at the constant speed section, a function for computing the new rotation number Rta for controlling the rotation of the dynamometer 2 shown in the following equation (3):

$$Rta=Rr\times(1+Sa) \qquad (3)$$

In this manner, in the control flow shown in Fig. 1, the driving slip correcting means 41 is provided between the rotation generator 16 and the delay correcting means 17. From this driving slip correcting means 41, the new target rotation number Rtb in which the driving slip correction (tire slip correction) is taken into consideration can be obtained at the time of acceleration, the new target rotation number Rtc in which the driving slip correction is taken into consideration can be obtained at the time of deceleration, and the new target rotation number Rta in which the driving slip correction is taken into consideration can be obtained at the time of constant speed running.

By controlling the rotation of the dynamometer 2 in accordance with the new target rotation pattern represented by the above equation (1), it is possible to accurately reproduce the engine rotation during actual vehicle running in which the slip between the tire and the road surface at the time of acceleration running is taken into consideration.

By controlling the rotation of the dynamometer 2 in accordance with the new target rotation pattern represented by the above equation (2), it is possible to accurately reproduce the engine rotation during actual vehicle running in which the slip between the tire and the road surface at the time of deceleration running is taken into consideration.

Further, by controlling the rotation of the dynamometer 2 in accordance with the new target rotation pattern represented by the above equation (3), it is possible to accurately reproduce the engine rotation during actual vehicle running in which the slip between the tire and the road surface at the time of constant speed running is taken into consideration.

As explained above, according to the engine testing apparatus of the first embodiment according to the invention, a new target rotation pattern is made for each of the constant speed section, the acceleration section and the deceleration section while taking the slip between the tire and the road surface into consideration, and the rotation of the dynamometer is controlled in accordance with the new target rotation pattern. Therefore, it is possible to simulate the actual vehicle running accurately, and to test the performance of the engine in a state close to the actual state.

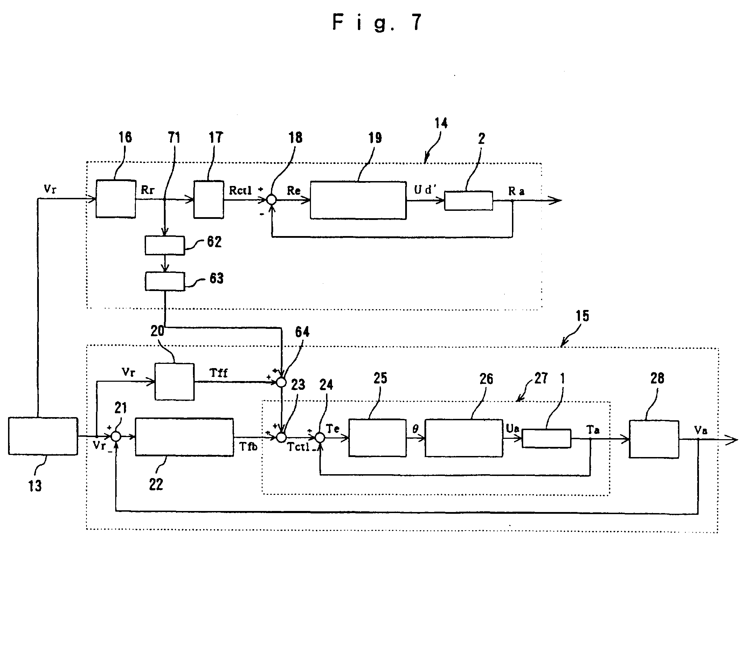

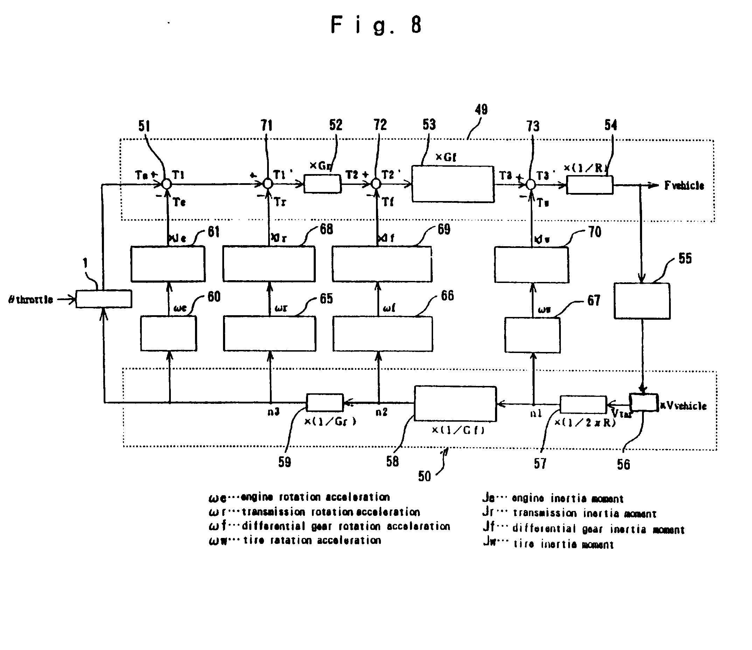

A second embodiment according to the invention will be explained with reference to the drawings. Figs. 7 and 8 show one further example of a control flow and a computation flow in the engine testing apparatus shown in Fig. 3. In Figs. 7 and 8, members and elements represented with the same numerals as those in Figs. 3, 5 and 9 are the same and thus, explanations thereof will be omitted.

Fig. 7 showing the control flow of the engine testing apparatus of the second embodiment according to the invention is largely different from Fig. 5 showing the control flow of the above-described conventional engine testing apparatus in that in a rotation control system 14, the circuit 62 for differentiating an output Vr of the rotation generator 16 is provided on a branch branching at a point 71 between the rotation generator 16 and the delay correcting circuit 17, a multiplier 63 for multiplying the output of the differentiator 62 by inertia moments of rotating bodies such as an engine, a transmission, a differential gear and a tire is provided in the rear stage of a differentiator 62 on this branch. The output from the multiplier 63 is added to an output Tff of the torque generator 20 of the simulation vehicle control system 15 in an addition point 64, and its added output is added to an output Tfb of the speed feedback controller 22, and the result is determined as a control target torque Tctl.

This will be explained in more detail using a computation flow shown in Fig. 8. In Fig. 8, the reference numerals 65, 66 and 67 represent differentiators.

That is, the differentiator 65 differentiates the engine rotation angle speed n3 output from the multiplier 59 to output a transmission rotation acceleration ωr. The differentiator 66 differentiates a rotation angle speed n2 closer to an entrance of the differential gear output from the multiplier 58 to output a differential gear rotation acceleration ωf. The differentiator 67 differentiates a rotation angle speed n1 of the tire to output a tire rotation acceleration ωw.

Multipliers 68, 69 and 70 for multiplying outputs from the differentiators 65, 66 and 67 by the predetermined multiplier are provided closer to output side of these differentiators 65, 66 and 67. That is, the multiplier 68 multiples the transmission rotation acceleration ωr by a transmission inertia moment Jr, and outputs a torque Tr absorbed by the transmission to a subtracting point 71 provided immediately in front of the multiplier 52 of the torque computation system 49. The multiplier 69 multiplies the differential gear rotation acceleration ωf by a differential gear inertia moment Jf, and outputs a torque Tf absorbed by the differential gear to a subtracting point 72 provided immediately in front of the multiplier 53 of the torque computation system 49. The multiplier 70 multiplies the tire rotation acceleration ωw by a tire inertia moment Jw, and outputs a torque Tw absorbed by the tire to a subtracting point 73 provided immediately in front of the multiplier 54 of the torque computation system 49.

In the engine testing apparatus of the above structure, as shown in the flowchart of Fig. 8, at a subtracting point 51, a torque value $T_E$ resulting from the inertia moment of the engine 1 under test is subtracted from an actual torque Ta of the engine 1 under test, and a torque value T1 ($=$Ta$-T_E$) is output from the subtracting point 51. In the subtracting point 71, a torque value Tr resulting from inertial moment of the transmission is subtracted from the torque value T1, and a torque value T1' ($=$T1-Tt) is output from the subtracting point 71. The torque value T1' is multiplied by a gear change ratio Gr in the multiplier 52, and a torque value T2 is output.

In the subtracting point 72, a torque value Tf resulting from differential gear is subtracted from the torque value T2, and a torque value T2' ($=$T2-Tf) is output from the subtracting point 72. The torque value T2' is multiplied by a differential gear ratio Gf in the multiplier 53, and a torque value T3 is output. Further, in the subtracting point 73, a torque value Tw resulting from the tire is subtracted from the torque value T3, and a torque value T3' ($=$T3-Tw) is output from the subtracting point 73. The torque value T3' is multiplied by a multiplier (1/R) concerning the tire diameter R in the multiplier 54, and a driving force Fvehicle in the tire surface is obtained.

As described above, in the engine testing apparatus of the above embodiment, in addition to the inertia moment of the engine which is taken into consideration in the conventional engine testing apparatus, torque resulting from the inertia moment of other rotating bodies such as the transmission, the differential gear and the tire are also computed, and these torque is taken into consideration such that the engine under test outputs the predetermined torque and therefore, it is possible to accurately reproduce the engine load during actual vehicle running, and to carry out a simulation with high accuracy.

Although the slip of the tire was not taken into consideration in the above embodiment, it may be taken into consideration. In this case, in the control flow shown in Fig. 7, a tire slip correcting circuit may be provided between the subtracting point 71 and the delay correcting circuit 17, and an output Tff of the torque generator 20 may be input to the tire slip correcting circuit. In this case, the simulation can be carried out with higher accuracy.

As explained above, according to the engine testing apparatus of the second embodiment according to the invention, since the output of the engine under test is controlled while taking the inertia moment of each of rotating bodies such as the engine into consideration, it is possible to simulate the actual vehicle running accurately, and to test the performance of the engine in a state close to the actual state.

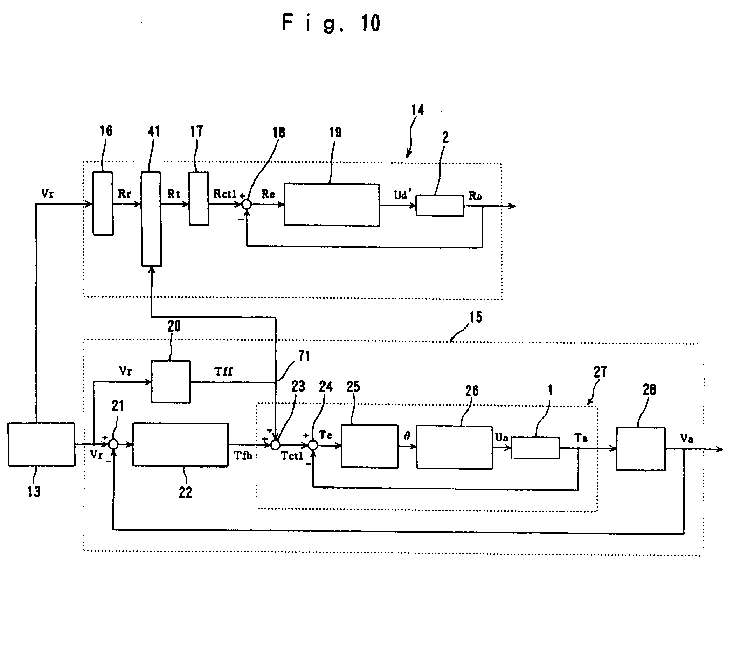

A third embodiment according to the invention will be explained with reference to the drawings. Fig. 10 shows one further example of a control flow in the engine testing apparatus shown in Fig. 3. Fig. 2 shows, in comparing manner, the engine rotation pattern 40 converted from the target vehicle speed pattern 12b in a simulation carried out by the engine testing apparatus of the third embodiment according to the invention and the engine rotation pattern 31 measured when the actual vehicle is allowed to run on the chassis dynamo. In Figs. 10 and 2, members and elements represented with the same numerals as those in Figs. 5 and 6 are the same and thus, explanations thereof will be omitted.

Fig. 10 showing the control flow of the engine testing apparatus of the third embodiment according to the invention is largely different from Fig. 5 showing the control flow of the above-described conventional engine testing apparatus in that the dynamometer 2 is controlled using a new rotation number Rt after the tire slip correction is made.

This will be explained in more detail using a control flow shown in Fig. 10. In Fig. 10, the reference numeral 41 represents tire slip correcting means provided between the rotation generator 16 and the delay correcting means 17.

This tire slip correcting means 41 has a function for computing a driving slip ratio y from the torque Tiff using multiple-degree equation function y=f(Tff), a computation function for multiplying the target rotation number Rr output from the rotation generator 16 by the driving slip ratio y, and a function for adding the obtained tire slip correcting term (Rr×y) to the target rotation number Rr to compute a new rotation number Rt for controlling the rotation of the dynamometer 2 shown in the following equation (1):

$$Rt = Rr \times (1+y) \qquad (1)$$

That is, the driving slip ratio y is defined as function y=f(Tff) of multiple-degree equation using the output torque (Tff) output from the torque generator 20 and required by the engine, the torque (Tff) is formed into a pattern as known value and thus, the driving slip ratio y can also be formed into a pattern.

Further, the target rotation number Rr of the dynamometer 2 is also formed into a pattern as known value, the tire slip correcting term (Rr×y) can by obtained by multiplying the target rotation number Rr by the driving slip ratio y.

Here, for example, the following equations (2) and (3) can be employed as the multiple-degree equation function y=f(Tff):

(i) when y is closer to a first degree equation,

$$y = f(Tff) = A \times Tff + B \qquad (2)$$

(ii) when y is closer to a second degree equation,

$$y = f(Tff) = A((Tff)^2 + B \times Tff + C \qquad (3)$$

(wherein A, B and C are constants).

In the case of the (i), it is possible to accurately reproduce the engine rotation number during the actual vehicle running in which the slip between the tire and the road surface is taken into consideration by controlling the rotation of the dynamometer 2 in accordance with a new target rotation pattern represented by the following equation (4):

$$Rt = Rr \times [1+(A \times Tff + B)] \qquad (4)$$

by substituting the equation (2) into the equation (1).

In the case of the (ii), the rotation of the dynamometer 2 is controlled in accordance with a new target rotation pattern represented by the following equation (5):

$$Rt = Rr \times [1+(A(Tff)^2 + B \times Tff + C)] \qquad (5)$$

by substituting the equation (3) into the equation (1).

In this manner, in the control flow shown in Fig. 10, the tire slip (driving slip) correcting means 41 is provided between the rotation generator 16 and the delay correcting circuit 17, the output Tff of the torque generator 20 is input to the tire slip correcting means 41, and the new target rotation number Rt in which the tire slip correction is taken into consideration can be obtained, and the rotation of the dynamometer 2 is controlled in accordance with the target rotation number Rt and therefore, it is possible to accurately reproduce the engine load during actual vehicle running, and to carry out a simulation with high accuracy.

As explained above, according to the engine testing apparatus of the third embodiment according to the invention, a new target rotation pattern is made while taking the slip between the tire and the road surface into consideration, and the rotation of the dynamometer is controlled in accordance with the new target rotation pattern. Therefore, it is possible to simulate the actual vehicle running accurately, and to test the performance of the engine in a state close to the actual state.

**Claims**

1. An engine testing apparatus, comprising a dynamometer (2) connected to an output section (1a) of an engine (1) under test used to simulate an actual vehicle running on a chassis dynamo, a dynamo controller (7) for controlling rotation of the dynamometer (2), and an actuator (6) for controlling a throttle opening degree of the engine (1) under test, the dynamo controller (7) and the actuator (6) are controlled to adjust an output of the engine (1) under test, **characterized in that** a constant speed driving slip ratio (Sa) in a constant speed running state in a target vehicle speed pattern, an acceleration driving slip ratio (Sb) in an acceleration running state, and a deceleration driving slip ratio (Sc) in a deceleration running state are previously computed and stored as data for correcting a tire slip caused during the actual vehicle running, and an engine target rotation number (Rr) obtained by converting said target vehicle speed pattern by values of said driving slip ratios (Sa), (Sb) and (Sc) is corrected for each of the running states, wherein a new engine target rotation number obtained by this correction is used at the time of simulation, thereby controlling the rotation of the dynamometer (2).

2. An engine testing apparatus according to claim 1, **characterized in that** in each of the running states, the rotation number (Rta) [Rta=Rr×(1+Sa)],(Rtb) [Rtb=R×(1+Sb)] or (Rtc) [Rtc=Rr×(1+Sc)] obtained by adding a term obtained by multiplying the engine target rotation number (Rr) by the constant speed driving slip ratio (Sa), the acceleration driving slip ratio (Sb) or the deceleration driving slip ratio (Sc) to the engine target rotation number (Rr) is determined as a new rotation number subjected to a tire slip correction, and these are used at the time of simulation, thereby controlling the rotation of the dynamometer (2).

3. An engine testing apparatus, comprising a dynamometer (2) connected to an output section (1a) of an engine (1) under test, a dynamo controller (7) for controlling the dynamometer (2), and an actuator (4) for controlling a throttle opening degree of the engine (1) under test, the dynamo controller (7) and the actuator (4) are controlled to adjust an output of the engine (1) under test, **characterized in that** each of the rotation accelerations of rotating bodies such as the engine (1), a transmission, a differential gear and a tire are obtained based on the target vehicle speed pattern, is multiplied by an inertia moment (Je, Jr, Jf, Jw) of each of the rotation bodies to calculate a torque (Te, Tr, Tf, Tw) absorbed by each of the rotating bodies, and the engine (1) under test is controlled such that the engine (1) under test outputs a predetermined torque while considering these absorbed torques.

4. An engine testing apparatus, comprising a dynamometer (2) connected to an output section (1a) of an engine (1) under test used to simulate an actual vehicle running on a chassis dynamo, a dynamo controller (7) for controlling rotation of the dynamometer (2), and an actuator (6) for controlling a throttle opening degree of the engine (1) under test, **characterized in that** a driving slip ratio (y) is computed and stored as a multiple-degree equation function y=f(Tff) using, as a variable, an output torque (Tff) output from a torque generator and required by the engine, the engine target rotation number (Rr) is corrected using this value, and the rotation of the dynamometer is controlled using this corrected new rotation number.

5. An engine testing apparatus according to claim 4, **characterized in that** the rotation number (Rt) [Rt=Rr×(1+y) ] obtained by adding a term obtained by multiplying the engine target rotation number (Rr) by the driving slip ratio (y) to the engine target rotation number (Rr) is determined as a new rotation number after the tire slip correction is made, and the rotation of the dynamometer (2) is controlled by using this new rotation number.

F i g. 1

# Fig. 2

EP 1 048 944 A2

# F i g. 3

measurement value of opening degree

command value of opening degree

clutch command

measurement value of rotation

measurement value of torque

A/D
D/A
DIO

speed command measurement value

dynamo control signal etc.

EP 1 048 944 A2

# F i g . 4

(A)

(B)

Fig. 5

# Fig. 6

EP 1 048 944 A2

Fig. 7

# F i g. 8

$\omega e$···engine rotation acceleration

$\omega r$···transmission rotation acceleration

$\omega f$···differential gear rotation acceleration

$\omega w$···tire rotation acceleration

$Je$··· engine inertia moment

$Jr$··· transmission inertia moment

$Jf$··· differential gear inertia moment

$Jw$··· tire inertia moment

Fig. 9

F i g. 10